# FASCICULE DE BREVET EUROPEEN

(11) **EP 0 762 992 B1**
(45) Date de publication et mention de la délivrance du brevet: **19.01.2000**
(21) Numéro de dépôt: 96910064.3
(22) Date de dépôt: 28.03.1996
(51) Int. Cl.: C01B 33/193, C09C 1/30, C08K 3/36

(54) **NOUVEAU PROCEDE DE PREPARATION DE SILICE PRECIPITEE, NOUVELLES SILICES PRECIPITEES CONTENANT DE L'ALUMINIUM ET LEUR UTILISATION AU RENFORCEMENT DES ELASTOMERES**
VERFAHREN ZUR HERSTELLUNG VON FÄLLUNGSKIESELSÄURE, ALUMINIUM-ENTHALTENDE FÄLLUNGSKIESELSÄUREN UND DEREN VERWENDUNG ZUR VERSTÄRKUNG VON ELASTOMEREN
NOVEL METHOD FOR PREPARING PRECIPITATED SILICA, NOVEL ALUMINIUM-CONTAINING PRECIPITATED SILICAS, AND USE THEREOF FOR REINFORCING ELASTOMERS

(30) Priorité: 29.03.1995 FR 9503675
(43) Date de publication de la demande: 19.03.1997
(73) Titulaire: RHODIA CHIMIE, 92408 Courbevoie Cédex (FR)
(72) Inventeur: BOMAL, Yves, F-75018 Paris (FR); CHEVALLIER, Yvonick, F-69270 Fontaines-Saint-Martin (FR); COCHET, Philippe, F-69009 Lyon (FR)
(74) Mandataire: Delenne, Marc
(86) Numéro de dépôt international: FR9600463
(87) Numéro de publication internationale: WO9630303

(56) Documents cités:
- EP-A- 0 407 262
- WO-A-95/09127
- FR-A- 2 303 763
- US-A- 3 967 563
- US-A- 4 040 858

## Description

La présente invention concerne un nouveau procédé de préparation de silice précipitée, des silices précipitées se présentant en particulier sous forme de poudre, de billes sensiblement sphériques ou de granulés, et leur application comme charge renforçante pour les élastomères.

On sait que la silice précipitée est utilisée depuis longtemps comme charge blanche renforçante dans les élastomères.

Cependant, comme toute charge renforçante, il convient qu'elle puisse se manipuler d'une part, et surtout s'incorporer d'autre part, facilement dans les mélanges.

On sait, d'une manière générale, que pour obtenir les propriétés de renforcement optimales conférées par une charge, il convient que cette dernière soit présente dans la matrice élastomère sous une forme finale qui soit à la fois la plus finement divisée possible et répartie de la façon la plus homogène possible. Or, de telles conditions ne peuvent être réalisées que dans la mesure où, d'une part, la charge présente une très bonne aptitude à s'incorporer dans la matrice lors du mélange avec l'élastomère (incorporabilité de la charge) et à se désagréger ou se désagglomérer sous la forme d'une poudre très fine (désagrégation de la charge), et où, d'autre part, la poudre issue du processus de désagrégation précité peut elle-même, à son tour, se disperser parfaitement et de façon homogène dans l'élastomère (dispersion de la poudre).

De plus, pour des raisons d'affinités réciproques, les particules de silice ont une fâcheuse tendance, dans la matrice élastomère, à s'agglomérer entre elles. Ces interactions silice/silice ont pour conséquence néfaste de limiter les propriétés de renforcement à un niveau sensiblement inférieur à celui qu'il serait théoriquement possible d'atteindre si toutes les interactions silice/élastomère susceptibles d'être créées pendant l'opération de mélange, étaient effectivement obtenues (ce nombre théorique d'interactions silice/élastomère étant, comme cela est bien connu, directement proportionnel à la surface externe, de la silice utilisée).

En outre, de telles interactions silice/silice tendent, à l'état cru, à augmenter la raideur et la consistance des mélanges, rendant ainsi leur mise en oeuvre plus difficile.

Le problème se pose de disposer de charges qui, tout en pouvant avoir une taille relativement élevée, présentent une très bonne aptitude à la dispersion dans les élastomères.

La présente invention a pour but d'obvier aux inconvénients précités et de résoudre le problème sus-mentionné.

Plus précisément, elle a notamment pour but de proposer un nouveau procédé de préparation de silice précipitée ayant, de manière avantageuse, une très bonne aptitude à la dispersion (et à la désagglomération) et des propriétés renforçantes très satisfaisantes, en particulier qui, utilisées à titre de charge renforçante pour élastomères, confère à ces derniers d'excellentes propriétés rhéologiques tout en leur procurant de bonnes propriétés mécaniques.

L'invention concerne également des silices précipitées qui, de préférence, se présentent sous forme de poudre, de billes sensiblement sphériques ou, éventuellement, de granulés, et qui, tout en présentant une taille relativement élevée, ont une très bonne aptitude à la dispersion (et à la désagglomération) et des propriétés renforçantes très satisfaisantes.

Elle est relative enfin à l'utilisation desdites silices précipitées comme charges renforçantes pour élastomères.

Dans l'exposé qui suit, la surface spécifique BET est déterminée selon la méthode de BRUNAUER - EMMET - TELLER décrite dans "The journal of the American Chemical Society", Vol. 60, page 309, février 1938 et correspondant à la norme NFT 45007 (novembre 1987).

La surface spécifique CTAB est la surface externe déterminée selon la norme NFT 45007 (novembre 1987) (5.12).

La prise d'huile DOP est déterminée selon la norme NFT 30-022 (mars 1953) en mettant en oeuvre le dioctylphtalate.

La densité de remplissage à l'état tassé (DRT) est mesurée selon la norme NFT-030100.

Le pH est mesuré selon la norme ISO 787/9 (pH d'une suspension à 5 % dans l'eau).

On précise enfin que les volumes poreux donnés sont mesurés par porosimétrie au mercure, les diamètres de pores étant calculés par la relation de WASHBURN avec un angle de contact théta égal à 130° et une tension superficielle gamma égale à 484 Dynes/cm (porosimètre MICROMERITICS 9300).

L'aptitude à la dispersion et à la désagglomération des silices selon l'invention peut être quantifiée au moyen d'un test spécifique de désagglomération.

Le test de désagglomération est réalisé selon le protocole suivant :
la cohésion des agglomérats est appréciée par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns). La désagglomération sous ultra-sons est effectuée à l'aide d'un sonificateur VIBRACELL BIOBLOCK (600 W), équipé d'une sonde de diamètre 19 mm. La mesure granulométrique est effectuée par diffraction laser sur un granulomètre SYMPATEC.

On pèse dans un pilulier (hauteur : 6 cm et diamètre : 4 cm) 2 grammes de silice et l'on complète à 50 grammes par ajout d'eau permutée : on réalise ainsi une suspension aqueuse à 4 % de silice qui est homogénéisée pendant 2 minutes par agitation magnétique. On procède ensuite à la désagglomération sous ultra-sons comme suit : la sonde étant immergée sur une longueur de 4 cm, on règle la puissance de sortie de manière à obtenir une déviation de l'aiguille du cadran de puissance indiquant 20 % (ce qui correspond à une énergie dissipée par l'embout de la sonde de 120 Watt/cm²). La désagglomération est effectuée pendant 420 secondes. On réalise ensuite la mesure granulométrique après avoir introduit dans la cuve du granulomètre un volume (exprimé en ml) connu de la suspension homogénéisée.

La valeur du diamètre médian ⌀₅₀ que l'on obtient est d'autant plus faible que la silice présente une aptitude à la désagglomération élevée. On détermine également le rapport (10 x volume de suspension introduite (en ml))/densité optique de la suspension détectée par le granulomètre (cette densité optique est de l'ordre de 20). Ce rapport est indicatif du taux de fines, c'est-à-dire du taux de particules inférieures à 0,1 µm qui ne sont pas détectées par le granulomètre. Ce rapport appelé facteur de désagglomération aux ultra-sons (F_{D}) est d'autant plus élevé que la silice présente une aptitude à la désagglomération élevée.

L'un des objets de l'invention est un procédé de préparation de silice précipitée du type comprenant la réaction d'un silicate avec un agent acidifiant ce par quoi l'on obtient une suspension de silice précipitée, puis la séparation et le séchage de cette suspension, dans lequel on réalise la précipitation de la manière suivante :
(i) on forme un pied de cuve initial comportant un silicate de métal alcalin M, et un électrolyte, la concentration en silicate (exprimée en SiO₂) dans ledit pied de cuve initial étant inférieure à 20 g/l,
(ii) on ajoute l'agent acidifiant audit pied de cuve jusqu'à ce qu'au moins 5 % de la quantité de M₂O présente dans ledit pied de cuve soient neutralisés,
(iii) on ajoute au milieu réactionnel simultanément de l'agent acidifiant et un silicate de métal alcalin M telle que le rapport quantité de silicate ajoutée (exprimée en SiO₂) / quantité de silicate présente dans le pied de cuve initial (exprimée en SiO₂), appelé taux de consolidaiton, soit supérieur à 4 et d'au plus 100,
caractérisé en ce que ledit procédé comprend une des deux opéraitons (a) ou (b) suivantes :
(a) on ajoute, après l'étape (iii), au milieu réactionnel au moins un composé A de l'aluminium, puis un agent basique, ladite séparation comportant une filtration et un délitage du gâteau issu de cette filtration, ledit délitage étant effectué en présence d'au moins un composé B de l'aluminium,
(b) on ajoute, après l'étape (iii), au milieu réactionnel simultanément un silicate et au moins un composé A de l'aluminium et, lorsque ladite séparation comporte une filtration et un délitage du gâteau issu de cette filtration, le délitage est de préférence effectué en présence d'au moins un composé B de l'aluminium.

Il a été ainsi trouvé que l'introduction d'aluminium, et ce selon une méthode particulière, combinée à une concentration faible en silicate (exprimée en SiO₂) dans le pied de cuve initial et à un taux de consolidation approprié lors de l'étape d'addition simultanée constituait une condition importante pour conférer aux produits obtenus leurs excellentes propriétés, notamment des propriétés renforçantes très satisfaisantes.

Il est à noter, d'une manière générale, que le procédé concerné est un procédé de synthèse de silice de précipitation, c'est-à-dire que l'on fait agir, dans des conditions très particulières, un agent acidifiant sur un silicate.

Le choix de l'agent acidifiant et du silicate se fait d'une manière bien connue en soi.

On peut rappeler que l'on utilise généralement comme agent acidifiant un acide minéral fort tel que l'acide sulfurique, l'acide nitrique ou l'acide chlorhydrique, ou un acide organique tel que l'acide acétique, l'acide formique ou l'acide carbonique.

L'agent acidifiant peut être dilué ou concentré ; sa normalité peut être comprise entre 0,4 et 36 N, par exemple entre 0,6 et 1,5 N.

En particulier, dans le cas où l'agent acidifiant est l'acide sulfurique, sa concentration peut être comprise entre 40 et 180 g/l, par exemple entre 60 et 130 g/l.

On peut par ailleurs utiliser en tant que silicate toute forme courante de silicates tels que métasilicates, disilicates et avantageusement un silicate de métal alcalin, notamment le silicate de sodium ou de potassium.

Le silicate peut présenter une concentration exprimée en silice comprise entre 40 et 330 g/l, par exemple entre 60 et 300 g/l, en particulier entrte 60 et 250 g/l.

De manière générale, on emploie, comme agent acidifiant, l'acide sulfurique, et, comme silicate, le silicate de sodium.

Dans le cas où l'on utilise le silicate de sodium, celui-ci présente, en général, un rapport pondéral SIO₂/Na₂O compris entre 2 et 4, par exemple entre 3,0 et 3,7.

En ce qui concerne plus particulièrement le procédé de préparation de l'invention, la précipitation se fait d'une manière spécifique selon les étapes suivantes.

On forme tout d'abord un pied de cuve qui comprend du silicate (étape (i)). La quantité de silicate présente dans le pied de cuve initial ne représente avantageusement qu'une partie de la quantité totale de silicate engagée dans la réaction.

Selon une caractéristique du procédé de préparation selon l'invention, la concentration en silicate dans le pied de cuve initial est (supérieure à 0 g/l et) inférieure à 20 g de SiO₂ par litre. Cette concentration peut être d'au plus 11 g/l et, éventuellement, d'au plus 8 g/l.

Notamment lorsque la séparation effectuée ultérieurement lors du procédé selon l'invention comprend une filtration effectuée au moyen d'un filtre presse (et plus particulièrement dans le cas où l'on souhaite préparer des silices ayant une surface spécifique CTAB d'au moins 140 m²/g), cette concentration peut être d'au moins 8g/l, en particulier comprise entre 10 et 15 g/l, par exemple entre 11 et 15 g/l ; le séchage mis en oeuvre plus loin dans le procédé selon l'invention peut être effectué par atomisation au moyen d'un atomiseur à buses.

Le pied de cuve peut comprendre un électrolyte. Néanmoins, de préférence, aucun électrolyte n'est utilisé au cours du procédé de préparation selon l'invention ; en particulier, de manière préférée, le pied de cuve initial ne comprend pas d'électrolyte.

Le terme d'électrolyte s'entend ici dan son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'agent acidifiant, par exemple le sulfate de sodium dans le cas de la réaction d'un silicate de sodium avec l'acide sulfurique.

La deuxième étape consiste à ajouter l'agent acidifiant dans le pied de cuve de composition décrite plus haut (étape (ii)).

Ainsi, dans cette deuxième étape, on ajoute l'agent acidifiant audit pied de cuve initial jusqu'à de qu'au moins 5 %, de préférence au moins 50 %, de la quantité M₂O présente dans ledit pied de cuve initial soient neutralisés.

De manière préférée, dans cette deuxième étape, on ajoute l'agent acidifiant audit pied de cuve initial jusqu'à ce que 50 à 99 % de la quantité de M₂O présente dans ledit pied de cuve initial soient neutralisés.

Une fois qu'est atteinte la valeur souhaitée de quantité M₂O neutralisé, on procède alors à une addition simultanée (étape (iii)) d'agent acidifiant et d'une quantité de silicate de métal alcalin M telle que le taux de consolidation, c'est-à-dire le rapport quantité de silicate ajoutée(exprimée en SiO₂) / quantité de silicate présente dans le pied de cuve initial (exprimée en SiO₂), soit supérieur à 4 et d'au plus 100.

Selon une variante du procédé de l'invention, on procède à cette addition simultanée d'agent acidifiant et d'une quantité de silicate de métal alcalin M telle que le taux de consolidation est plus particulièrement compris entre 12 et 100, de préférence entre 12 et 50, notamment entre 13 et 40.

Selon une autre variante du procédé de l'invention, on procède à cette addition simultanée d'agent acidifiant et d'une quantité de silicate de métal alcalin M telle que le taux de consolidation est plutôt supérieur à 4 et inférieur à 12, de préférence compris entre 5 et 11,5, notamment entre 7,5 et 11. Cette variante est, en général, mise en oeuvre quand la concentration en silicate dans le pied de cuve initial est d'au moins 8 g/l, en particulier entre 10 et 15 g/l, par exemple entre 11 et 15 g/l.

De manière préférée, pendant toute l'étape (iii), la quantité d'agent acidifiant ajoutée est telle que 80 à 99 %, par exemple 85 à 97 %, de la quantité de M₂O ajoutée soient neutralisés.

Dans l'étape (iii), il est possible de procéder à l'addition simultanée d'agent acidifiant et de silicate à un premier palier de pH du milieu réactionnel, pH₁, puis à un second palier de pH du milieu réactionnel, pH₂, tel que 7 < pH₂ < pH₁ < 9.

Selon une caractéristique essentielle du procédé de préparation selon l'invention, celui-ci comprend une des deux opérations (a) ou (b) mentionnées précédemment, c'est-à-dire :
(a) on ajoute, après l'étape (iii), au milieu réactionnel au moins un composé A de l'aluminium, puis un agent basique, la séparation, mise en oeuvre dans le procédé, comportant une filtration et un délitage du gâteau issu de cette filtration, ledit délitage étant effectué en présence d'au moins un composé B de l'aluminium, ou
(b) on ajoute, après l'étape (iii), au milieu réactionnel simultanément un silicate et au moins un composé A de l'aluminium et, lorsque la séparation, mise en oeuvre dans le procédé, comporte une filtration et un délitage du gâteau issu de cette filtration, le délitage est de préférence effectué en présence d'au moins un composé B de l'aluminium.

Dans une première variante du procédé de préparation selon l'invention (c'est-à-dire lorsque celui-ci comprend l'opération (a)), on effectue avantageusement, après avoir réalisé la précipitation selon les étapes (i), (ii) et (iii) précédemment décrites, les étapes successives suivantes :
(iv) on ajoute au milieu réactionnel (c'est-à-dire à la suspension ou bouillie réactionnelle obtenue) au moins un composé A de l'aluminium,
(v) on ajoute au milieu réactionnel un agent basique, de préférence jusqu'à l'obtention d'une valeur du pH du milieu réactionnel comprise entre 6,5 et 10, en particulier entre 7,2 et 8,6,
(vi) on ajoute au milieu réactionnel de l'agent acidifiant, de préférence jusqu'à l'obtention d'une valeur du pH du milieu réactionnel comprise entre 3 et 5, en particulier entre 3,4 et 4,5.

Il peut être alors avantageux d'effectuer, après l'addition simultanée de l'étape (iii), un mûrissement du milieu réactionnel, ce mûrissement pouvant par exemple durer de 1 à 60 minutes, en particulier de 3 à 30 minutes.

Dans cette première variante, il est souhaitable, entre l'étape (iii) et l'étape (iv), et notamment avant ledit mûrissement éventuel, d'ajouter au milieu réactionnel une quantité supplémentaire d'agent acidifiant. Cette addition se fait généralement jusqu'à l'obtention d'une valeur du pH du milieu réactionnel comprise entre 3 et 6,5, en particulier entre 4 et 6.

L'agent acidifiant utilisé lors de cette addition est généralement identique à celui employé lors des étapes (ii), (iii) et (vi) de la première variante du procédé de préparation selon l'invention.

Un mûrissement du milieu réactionnel est habituellement effectué entre l'étape (v) et l'étape (vi), par exemple pendant 2 à 60 minutes, en particulier pendant 5 à 45 minutes.

De même, un mûrissement du milieu réactionnel est le plus souvent effectué après l'étape (vi), par exemple pendant 2 à 60 minutes, en particulier pendant 5 à 30 minutes.

L'agent basique utilisé lors de l'étape (iv) peut être une solution d'ammoniaque ou, de préférence, une solution d'hydroxyde de sodium (ou soude).

Dans une seconde variante du procédé de préparation selon l'invention (c'est-à-dire lorsque celui-ci comprend l'opération (b)), on effectue, après les étapes (i), (ii) et (iii) précédemment décrites, une étape (iv) qui consiste à ajouter au milieu réactionnel simultanément un silicate et au moins un composé A de l'aluminium.

Il peut être alors avantageux d'effectuer, après l'addition simultanée de l'étape (iv), un mûrissement du milieu réactionnel, ce mûrissement pouvant par exemple durer de 2 à 60 minutes, en particulier de 5 à 30 minutes.

Dans cette seconde variante, il est souhaitable, après l'étape (iv), et notamment après ce mûrissement éventuel, d'ajouter au milieu réactionnel une quantité supplémentaire d'agent acidifiant. Cette addition se fait généralement jusqu'à l'obtention d'une valeur du pH du milieu réactionnel comprise entre 3 et 6,5, en particulier entre 4 et 6.

L'agent acidifiant utilisé lors de cette addition est généralement identique à celui employé lors des étapes (ii) et (iii) de la seconde variante du procédé de préparation selon l'invention.

Un mûrissement du milieu réactionnel est habituellement effectué après cette addition d'agent acidifiant, par exemple pendant 1 à 60 minutes, en particulier pendant 3 à 30 minutes.

Le composé A de l'aluminium employé dans le procédé de préparation selon l'invention est en général un sel organique ou inorganique de l'aluminium.

A titre d'exemples de sel organique, on peut citer notamment les sels d'acides carboxyliques ou polycarboxyliques, comme les sels d'acide acétique, citrique, tartrique ou oxalique.

A titre d'exemples de sel inorganique, on peut citer notamment les halogénures et les oxyhalogénures (comme les chlorures, les oxychlorures), les nitrates, les phosphates, les sulfates et les oxysulfates.

Dans la pratique, le composé A de l'aluminium peut être utilisé sous la forme d'une solution, en général aqueuse.

De préférence, on emploie à titre de composé A de l'aluminium un sulfate d'aluminium.

La température du milieu réactionnel est généralement comprise entre 60 et 98 °C.

Selon une variante de l'invention, la réaction est effectuée à une température constante comprise entre 70 et 96 °C.

Selon une autre variante de l'invention, la température de fin de réaction est plus élevée que la température de début de réaction : ainsi, on maintient la température au début de la réaction de préférence entre 70 et 96 °C, puis on augmente la température en quelques minutes, de préférence jusqu'à une valeur comprise entre 75 et 98 °C, valeur à laquelle elle est maintenue jusqu'à la fin de la réaction ; les opérations (a) ou (b) sont ainsi habituellement effectuées à cette valeur constante de température.

On obtient, à l'issue des étapes qui viennent d'être décrites, une bouillie de silice qui est ensuite séparée (séparation liquide-solide).

Dans la première variante du procédé de préparation selon l'invention (c'est-à-dire lorsque celui-ci comprend l'opération (a)), cette séparation comporte une filtration (suivie d'un lavage si nécessaire) et un délitage, ledit délitage étant effectué en présence d'au moins un composé B de l'aluminium et, de préférence, en présence d'un agent acidifiant tel que décrit précédemment (dans ce dernier cas, le composé B de l'aluminium et l'agent acidifiant sont avantageusemement ajoutés de manière simultanée).

L'opération de délitage, qui peut être réalisée par exemple par passage du gâteau de filtration dans un broyeur de type colloïdal ou à bille, permet notamment d'abaisser la viscosité de la suspension à sécher ultérieurement.

Dans la seconde variante du procédé de préparation selon l'invention (c'est-à-dire lorsque celui-ci comprend l'opération (b)), la séparation comporte aussi, en général, une filtration (suivie d'un lavage si nécessaire) et un délitage, ledit délitage étant de préférence effectué en présence d'au moins un composé B de l'aluminium et, en général, en présence d'un agent acidifiant tel que décrit précédemment (dans ce dernier cas, le composé B de l'aluminium et l'agent acidifiant sont avantageusemement ajoutés de manière simultanée).

Le composé B de l'aluminium est habituellement différent du composé A de l'aluminium mentionné précédemment et consiste, en général, en un aluminate de métal alcalin, notamment de potassium ou, de manière très préférée, de sodium.

De préférence, les quantités de composés A et B de l'aluminium utilisées dans le procédé de préparation selon l'invention sont telles que la silice précipitée préparée contient au moins 0,35 %, en particulier au moins 0,45 %, par exemple entre 0,50 et 1,50 %, voire entre 0,75 et 1,40 %, en poids d'aluminium.

La séparation mise en oeuvre dans le procédé de préparation selon l'invention comprend habituellement une filtration effectuée au moyen de toute méthode convenable, par exemple au moyen d'un filtre à bande, d'un filtre rotatif sous vide ou, de préférence, d'un filtre presse.

La suspension de silice précipitée ainsi récupérée (gâteau de filtration) est ensuite séchée.

Ce séchage peut se faire selon tout moyen connu en soi.

De préférence, le séchage se fait par atomisation.

A cet effet, on peut utiliser tout type d'atomiseur convenable, notamment un atomiseur à turbines, à buses, à pression liquide ou à deux fluides.

Le séchage est par exemple effectué par atomisation au moyen d'un atomiseur à buses notamment quand la concentration en silicate dans le pied de cuve initial est d'au moins 8 g/l (et inférieure à 20 g/l), en particulier comprise entre 10 et 15 g/l (et plus particulièrement dans le cas où l'on souhaite préparer des silices ayant une surface spécifique CTAB d'au moins 140 m²/g).

Selon un mode de réalisation de l'invention, la suspension à sécher présente un taux de matière sèche supérieur à 15 % en poids, de préférence supérieur à 17 % en poids et, par exemple, supérieur à 20 % en poids. Le séchage est alors de préférence effectué au moyen d'un atomiseur à buses.

La silice précipitée susceptible d'être obtenue selon ce mode de réalisation de l'invention et de préférence en mettant en oeuvre un filtre presse se présente avantageusement sous forme de billes sensiblement sphériques, de préférence d'une taille moyenne d'au moins 80 µm.

Il est à noter que l'on peut également, après la filtration, à une étape ultérieure du procédé, rajouter au gâteau de filtration de la matière sèche, par exemple de la silice sous forme pulvérulente.

A l'issue du séchage, on peut procéder à une étape de broyage sur le produir récupéré, notamment sur le produit obtenu par séchage de suspension présentant un taux de matière sèche supérieur à 15 % en poids. La silice précipitée qui est alors susceptible d'être obtenue se présente généralement sous forme d'une poudre, de préférence de taille moyenne d'au moins 15 µm, en particulier comprise entre 15 et 60 µm, par exemple entre 20 et 45 µm.

Les produits broyés à la granulométrie désirée peuvent être séparés des éventuels produits non conformes au moyen par exemple de tamis vibreurs présentant des tailles de maille appropriées, et les produits non conformes ainsi récupérés être renvoyés au broyage.

De même, selon un autre mode de réalisation de l'invention, la suspension à sécher présente un taux de matière sèche d'au plus 15 % en poids. Le séchage est alors en général effectué au moyen d'un atomiseur à turbines. La silice précipitée qui est alors susceptible d'être obtenue selon ce mode de réalisation de l'invention et de préférence en mettant en oeuvre un filtre rotatif sous vide se présente généralement sous la forme d'une poudre, de préférence de taille moyenne d'au moins 15 µm, en particulier comprise entre 30 et 150 µm, par exemple entre 45 et 120 µm.

Enfin, le produit séché (notamment à partir d'une suspension ayant un taux de matière sèche d'au plus 15 % en poids) ou broyé peut, selon un autre mode de réalisation de l'invention, être soumis à une étape d'agglomération.

On entend ici par agglomération tout procédé qui permet de lier entre eux des objets finement divisés pour les amener sous la forme d'objets de plus grande taille et résistant mieux mécaniquement.

Ces procédés sont notamment la compression directe, la granulation voie humide (c'est-à-dire avec utilisation d'un liant tel que eau, slurry de silice, ...), l'extrusion et, de préférence, le compactage à sec.

Lorsque l'on met en oeuvre cette dernière technique, il peut s'avérer avantageux, avant de procéder au compactage, de désaérer (opération aussi appelée pré-densification ou dégazage) les produits pulvérulents de manière à éliminer l'air inclus dans ceux-ci et assurer un compactage plus régulier.

La silice précipitée susceptible d'être obtenue selon ce mode de réalisation de l'invention se présente avantageusement sous la forme de granulés, de préférence de taille d'au moins 1 mm, en particulier comprise entre 1 et 10 mm.

A l'issue de l'étape d'agglomération, les produits peuvent être calibrés à une taille désirée, par exemple par tamisage, puis conditionnés pour leur utilisation future.

Les poudres, de même que les billes, de silice précipitée obtenues par le procédé selon l'invention offrent ainsi l'avantage, entre autre, d'accéder de manière simple, efficace et économique à des granulés tels que précités, notamment par des opérations classiques de mise en forme, telles que par exemple une granulation ou un compactage, sans que ces dernières n'entraînent de dégradations susceptibles de masquer, voire annihiler, les bonnes propriétés intrinsèques attachées à ces poudres ou ces billes, comme cela peut être le cas dans l'art antérieur en mettant en oeuvre des poudres classiques.

D'autres objets de l'invention consistent en de nouvelles silices précipitées ayant une très bonne aptitude à la dispersion (et à la désagglomération) et des propriétés renforçantes très satisfaisantes, en particulier qui, utilisées à titre de charge renforçante pour élastomères, confère à ces derniers de bonnes propriétés rhéologiques tout en leur procurant des propriétés mécaniques très satisfaisantes.

Ainsi, il est maintenant proposé, selon l'invention, une nouvelle silice précipitée caractérisée en ce qu'elle possède :
- une surface spécifique CTAB comprise entre 100 et 240 m²/g,
- une prise d'huile DOP inférieure à 300 ml/100g, de préférence comprise entre 200 et 295 ml/100g,
- un diamètre médian (⌀₅₀), après désagglomération aux ultra-sons, inférieur à 5 µm,
- une distribution poreuse telle que le volume poreux constitué par les pores dont le diamètre est compris entre 175 et 275 Å représente moins de 50 % du volume poreux constitué par les pores de diamètres inférieurs ou égaux à 400 Å,
- une teneur en aluminium d'au moins 0,35 % en poids, de préférence d'au moins 0,45 % en poids.

La silice selon l'invention présente, de manière préférée, une teneur en aluminium comprise entre 0,50 et 1,50 % en poids ; cette teneur peut être notamment comprise entre 0,75 et 1,40 % en poids.

Une des caractéristiques de la silice selon l'invention réside dans la distribution, ou répartition, du volume poreux, et notamment dans la distribution du volume poreux qui est généré par les pores de diamètres inférieurs ou égaux à 400 Å. Ce dernier volume correspond au volume poreux utile des charges qui sont employées dans le renforcement des élastomères. L'analyse des porogrammes montre qu'alors la silice selon l'invention possède une distribution poreuse telle que le volume poreux constitué par les pores dont le diamètre est compris entre 175 et 275 Å représente moins de 50 %, par exemple moins de 40 %, du volume poreux constitué par les pores de diamètres inférieurs ou égaux à 400 Å.

Selon un premier mode particulier de réalisation de l'invention, la silice précipitée possède :
- une surface spécifique CTAB comprise entre 140 et 240 m²/g, de préférence entre 140 et 225 m²/g, en particulier entre 150 et 225 m²/g, par exemple, entre 150 et 200 m²/g,
- un facteur de désagglomération aux ultra-sons (F_{D}) supérieur à 5,5ml, en particulier supérieur à 11 ml, par exemple supérieur à 12,5 ml.

Elle possède alors généralement une surface spécifique BET comprise entre 140 et 300 m²/g, en particulier entre 140 et 280 m²/g, par exemple entre 150 et 270 m²/g.

Selon un deuxième mode particulier de réalisation de l'invention, la silice précipitée possède :
- une surface spécifique CTAB comprise entre 100 et 140 m2/g, de préférence entre 100 et 135 m²/g,
- un diamètre médian (⌀₅₀), après désagglomération aux ultra-sons, inférieur à 4,5µm, en particulier inférieur à 4 µm, par exemple inférieur à 3,8 µm. Elle possède alors généralement une surface spécifique BET comprise entre 100 et 210 m²/g, notamment entre 100 et 180 m²/g.

Selon une variante de l'invention, la silice possède un rapport surface spécifique BET / surface spécifique CTAB compris entre 1,0 et 1,2, c'est-à-dire qu'elle présente de préférence une faible microporosité.

Selon une autre variante de l'invention, la silice possède un rapport surface spécifique BET / surface spécifique CTAB supérieur à 1,2, par exemple compris entre 1,21 et 1,4, c'est-à-dire qu'elle présente une microporosité relativement élevée.

Le pH de la silice selon l'invention est, en général, compris entre 6,5 et 7,5, par exemple entre 6,7 et 7,3.

Les silices selon l'invention peuvent se présenter sous forme de poudre, de billes sensiblement sphériques ou, éventuellement, de granulés et sont notamment caractérisées par le fait que, tout en ayant une taille relativement élevée, elles présentent une très bonne aptitude à la dispersion et à la désagglomération et des propriétés renforçantes très satisfaisantes. Elles présentent ainsi une aptitude à la dispersion et à la désaggglomération avantageusement supérieure, à surface spécifique identique ou proche et à taille identique ou proche, à celle des silices de l'art antérieur.

Les poudres de silice selon l'invention présentent préférentiellement une taille moyenne d'au moins 15 µm ; celle-ci est par exemple comprise entre 15 et 60 µm (notamment entre 20 et 45 µm) ou entre 30 et 150 µm (notamment entre 45 et 120 µm).

Elles possèdent, de manière préférée, une prise d'huile DOP comprise entre 240 et 290 ml/100g.

La densité de remplissage à l'état tassé (DRT) desdites poudres est, en général, d'au moins 0,17, et, par exemple, comprise entre 0,2 et 0,3.

Lesdites poudres présentent généralement un volume poreux total d'au moins 2,5 cm³/g, et, plus particulièrement, compris entre 3 et 5 cm³/g.

Elles permettent notamment d'obtenir un très bon compromis mise en oeuvre/propriétés mécaniques à l'état vulcanisé.

Elles constituent aussi des précurseurs privilégiés pour la synthèse de granulés tels que décrits plus loin.

Les billes sensiblement sphériques selon l'invention présentent préférentiellement une taille moyenne d'au moins 80 µm.

Selon certaines variantes de l'invention, cette taille moyenne des billes est d'au moins 100 µm, par exemple d'au moins 150 µm ; elle est généralement d'au plus 300 µm et se situe de préférence entre 100 et 270 µm. Cette taille moyenne est déterminée selon la norme NF X 11507 (décembre 1970) par tamisage à sec et détermination du diamètre correspondant à un refus cumulé de 50 %.

Elles possèdent, de manière préférée, une prise d'hulie DOP comprise entre 240 et 290 ml/100g.

La densité de remplissage à l'état tassé (DRT) desdites billes (ou perles) est, en général, d'au moins 0,17, et, par exemple, comprise entre 0,2 et 0,34.

Elles présentent habituellement un volume poreux total d'au moins 2,5 cm³/g, et plus particulièrement, compris entre 3 et 5 cm³/g.

Comme indiqué ci-avant, une telle silice sous forme de billes sensiblement sphériques, avantageusement pleines, homogènes, peu poussièrantes et de bonne coulabilité, présente une excellente aptitude à la désagglomération et à la dispersion. En outre, elle présente de bonnes propriétés renforçantes. Une telle silice constitue également un précurseur privilégié pour la synthèse des poudres et des granulés selon l'invention.

Une telle silice sous forme de billes sensiblement sphériques constitue une variante très avantageuse de l'invention.

Les dimensions des granulés selon l'invention sont préférentiellement d'au moins 1 mm, en particulier comprises entre 1 et 10 mm, selon l'axe de leur plus grande dimension (longueur).

Ils possèdent, de manière préférée, une prise d'hulie DOP comprise entre 200 et 260 ml/100g.

Lesdits granulés peuvent se présenter sous des formes les plus diverses. A titre d'exemple, on peut notamment citer les formes sphérique, cylindrique, parallélépipédique, de pastille, de plaquette, de boulette, d'extrudé à section circulaire ou polylobée.

La densité de remplissage à l'état tassé (DRT) desdits granulés est en général d'au moins 0,27 et peut aller jusqu'à 0,37.

Ils présentent généralement un volume poreux total d'au moins 1 cm³/g, et, plus particulièrement, entre 1,5 et 2 cm³/g.

Les silices selon l'invention, notamment sous forme de poudre, de billes sensiblement sphériques ou de granulés, sont de préférence préparées selon l'une des variantes appropriées du procédé de préparation conforme à l'invention et décrit précédemment.

Les silices selon l'invention ou préparées par le procédé selon l'invention trouvent une application particulièrement intéressante dans le renforcement des élastomères, naturels ou synthétiques. Elles confèrent à ces élastomères d'excellentes propriétés rhéologiques tout en leur procurant de bonnes propriétés mécaniques et, en général, une bonne résistance à l'abrasion. De plus, ces élastomères sont alors de préférence sujets à un échauffement réduit.

Les exemples suivants illustrent l'invention sans toutefois en limiter la portée.

### EXEMPLE 1

Dans un réacteur en acier inoxydable muni d'un système d'agitation par hélices et d'un chauffage par double enveloppe, on introduit:
- 733 litres d'eau, et
- 46,5 litres d'une solution de silicate de sodium (de rapport pondéral SiO₂/Na₂O égal à 3,4) ayant une concentration exprimée en silice de 235 g/l.

La concentration en silicate exprimée en SiO₂ dans le pied de cuve initial est donc de 14 g/l. La solution est alors portée à une température de 80 °C tout en la maintenant sous agitation. L'ensemble de la réaction est effectué à 80 °C sous agitation. On y introduit ensuite, pendant 9 mn, de l'acide sulfurique dilué, de densité à 20 °C égale à 1,050, à un débit de 5,4 l/mn ; à l'issue de cette addition, le taux de neutralisation du pied de cuve est de 78 %, c'est-à-dire que 78 % de la quantité de Na₂O présente dans le pied de cuve initial sont neutralisés.

On introduit ensuite simultanément, pendant 90 mn, dans le milieu réactionnel une solution de silicate de sodium du type décrit ci-avant, à un débit de 4,3 l/mn, et de l'acide sulfurique dilué également du type décrit ci-avant, à un débit régulé de manière à maintenir, dans le milieu réactionnel, le pH :
- à une valeur de 8,5 ± 0,1 pendant les 55 premières minutes, puis
- à une valeur de 7,8 ± 0,1 pendant les 35 dernières minutes.

Lors de cette addition simultanée, le taux de neutralisation instantané est de 94 %, c'est-à-dire que 94 % de la quantité de Na₂O ajoutée (par mn) sont neutralisés.

Le taux de consolidation, à l'issue de cette addition simultanée, est égal à 8,3.

On introduit ensuite dans le milieu réactionnel, pendant 6 minutes, à un débit de 4,6 l/mn, une solution de sulfate d'aluminium de densité à 20 °C égale à 1,2. A l'issue de cette addition, on introduit dans le milieu réactionnel, à un débit de 3,8 I/mn, de la soude concentrée à 18 %, jusqu'à ce que le pH du milieu réactionnel soit égal à 8,0.

On arrête ensuite l'introduction de soude et on procède à un mûrissement du milieu réactionnel pendant 20 minutes à une température de 80 °C.

Puis on introduit, à un débit de 4,0 l/mn, de l'acide sulfurique dilué de densité à 20°C égale à 1,050, jusqu'à ce que le pH du milieu réactionnel soit égal à 3,7.

On arrête ensuite l'introduction d'acide et on procède à un mûrissement du milieu réactionnel pendant 10 minutes à une température de 80 °C.

La durée totale de la réaction est de 159 minutes.

On obtient ainsi une bouillie de silice précipitée qui est filtrée et lavée au moyen d'un filtre presse.

Le gâteau obtenu est ensuite fluidifié par action mécanique et chimique (ajout simultané d'acide sulfurique et d'une quantité d'aluminate de sodium correspondant à un rapport pondéral Al/SiO₂ de 0,25 %). Après cette opération de délitage, la bouillie résultante, de pH égal à 6,5 et de perte au feu égale à 79,0 % (donc un taux de matière sèche de 21,0 % en poids), est atomisée au moyen d'un atomiseur à buses.

Les caractéristiques de la silice obtenue P1 sous forme de billes sensiblement sphériques (conforme à l'invention) sont alors les suivantes :
- surface spécifique CTAB 150 m²/g
- surface spécifique BET 177 m²/g
- prise d'huile DOP 292 ml/100g
- teneur pondéral en aluminium 0,85 %
- volume poreux V1 représenté par les pores de d ≤ 400 Å 0,97 cm³/g
- volume poreux V2 représenté par les pores 175 Å ≤ d ≤ 275 Å 0,42 cm³/g
- rapport V2/V1 43 %
- pH 6,9
- taille moyenne des particules 245 µm

On soumet la silice P1 au test de désagglomération tel que défini précédemment dans la description.

Après désagglomération aux ultra-sons, elle présente un diamètre médian (⌀₅₀) de 2,5 µm et un facteur de désagglomération aux ultra-sons (F_{D}) de 18 ml.

Les caractéristiques de la silice préparée dans l'exemple 1, ainsi que celles d'une silice commerciale vendue sous forme de billes sensiblement sphériques par la société RHONE-POULENC CHIMIE comme charge renforçante pour élastomères, en l'occurrence la silice ZEOSIL® 175 MP (référencée MP1), sont rassempblées dans le tableau I ci-dessous.

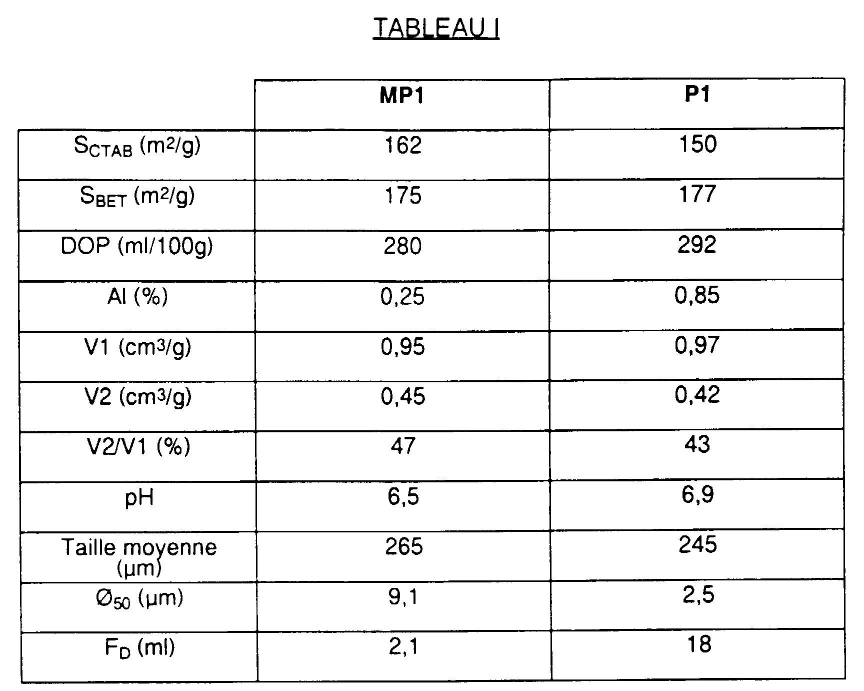

### EXEMPLE 2

Cet exemple illustre l'utilisation et le comportement d'une silice selon l'invention et d'une silice non conforme à l'invention dans une formulation pour caoutchouc industriel.

On utilise la formulation suivante (les parties sont exprimées en poids) :
- Caoutchouc S.B.R. 1955 S 25 ⁽¹⁾ 50
- Caoutchouc B.R. 1220 ⁽²⁾ 25
- Caoutchouc naturel 25
- Silice 51
- ZnO actif ⁽³⁾ 1,8
- Acide stéarique 0,35
- 6PPD ⁽⁴⁾ 1,45
- CBS ⁽⁵⁾ 1,1
- DPG ⁽⁶⁾ 1,4
- Soufre ⁽⁷⁾ 0,9
- Silane X50S ⁽⁸⁾ 8,15

(1) Copolymère styrène butadiène solution type 1955 S 25
(2) Polymère butadiène type 1220
(3) Oxyde de zinc qualité caoutchouc
(4) N-(diméthyl-1,3 butyl)-N'-phényl-p-phénylène diamine
(5) N-cyclohexyl 2-benzothiazyl sulfènamide
(6) Diphényl guanidine
(7) Agent vulcanisant
(8) Agent de couplage silice/caoutchouc (produit commercialisé par la Société DEGUSSA)

Les formulations sont préparées de la manière suivante :

Dans un mélangeur interne (type BANBURY), on introduit dans cet ordre et aux temps et températures du mélange indiqués entre parenthèses :
- du S.B.R. 1955 S 25, du B.R.1220 et du caoutchouc naturel (tₒ)(60 °C)
- le X50S et les 2/3 de la silice (tₒ + 1 mn)(80 °C)
- le ZnO, l'acide stéarique, le 6PPD et 1/3 de la silice (tₒ + 2 mn)(100 °C)

La décharge du mélangeur (tombée du mélange) se fait quand la température de la chambre atteint 165 °C (c'est-à-dire, à peu près tₒ + 5 mn 10 s). Le mélange est introduit sur un mélangeur à cylindres, maintenus à 30 °C, pour y être calandré. Sur ce mélangeur, on introduit le CBS, le DPG et le soufre.

Après homogénéisation et trois passages au fin, le mélange final est calandré sous la forme de feuilles de 2,5 à 3 mm d'épaisseur.

Les résultats des essais sont les suivants :

### 1- Propriétés rhéologiques

Les mesures sont réalisées sur les formulations à l'état cru.

Les résultats sont reportés dans le tableau Il ci-dessous. On a indiqué l'appareillage utilisé pour conduire les mesures.

**TABLEAU II**

| | MP1 | P1 |
|---|---|---|
| Consistance MOONEY ⁽¹⁾ | 130 | 90 |
| Couple mini (ln.lb) ⁽²⁾ | 26,5 | 19,6 |

| | | |
|---|---|---|
| (1) Viscosimètre MOONEY MV 2000E (mesure de Mooney Large (1+4) à 100 °C) | | |
| (2) Rhéomètre MONSANTO 100 S | | |

La formulation obtenue à partir de la silice selon l'invention conduit aux valeurs les plus faibles.

Ceci traduit une plus grande facilité de mise en oeuvre des mélanges préparés à partir de silice selon l'invention, en particulier au niveau des opérations d'extrusion et de calandrages souvent réalisées lors de la confection de compositions élastomériques (moindre dépense d'énergie pour mettre en oeuvre le mélange, plus grande facilité d'injection lors du mélangeage, moindre gonflement en filière lors de l'extrusion, moindre retrait au calandrage,...).

### 2- Propriétés mécaniques

Les mesures sont réalisées sur les formulations vulcanisées.

La vulcanisation est réalisée en portant les formulations à 150 °C pendant 40 minutes.

Les normes suivantes ont été utilisées :
(i) essais de traction (modules, résistance à la rupture) : NFT 46-002 ou ISO 37-1977
(ii) essais de résistance à l'abrasion DIN 53-516

Les résultats obtenus sont consignés dans le tableau III ci-dessous.

**TABLEAU III**

| | MP1 | P1 |
|---|---|---|
| module 300 % / module 100 % | 3,4 | 5,0 |
| Résistance rupture (MPa) | 17,1 | 20,9 |
| Résistance abrasion (mm³) ⁽¹⁾ | 58 | 45 |

| | | |
|---|---|---|
| (1) la valeur mesurée est la perte à l'abrasion : plus elle est faible et meilleure est la résistance à l'abrasion. | | |

Ces derniers résultats montrent le bon effet de renforcement conféré par la silice selon l'invention.

Ainsi, tout en conduisant à des propriétés rhéologiques plus satisfaisantes, la silice selon l'invention procure des propriétés mécaniques meilleures que celles obtenues avec la silice de l'art antérieur.

D'une part, la silice selon l'invention conduit à un rapport module 300 % / module 100 % supérieur à celui obtenu avec la silice de l'art antérieur, preuve d'une meilleure dispersion de la silice au sein de la matrice caoutchouc.

D'autre part, le haut pouvoir renforçant de la silice selon l'invention est confirmé par la valeur élevée obtenue pour la résistance à la rupture.

Enfin, concernant la résistance à l'abrasion, on note que la perte à l'abrasion est réduite sensiblement (20 % environ) par rapport à la silice comparative.

### 3- Propriétés dynamiques

Les mesures sont réalisées sur les formulations vulcanisées.

La vulcanisation est obtenue en portant les formulations à 150 °C pendant 40 minutes. Les résultats (illustrant la tendance à l'échauffement) sont reportés dans le tableau IV ci-dessous (plus la valeur est faible, moindre est la tendance à l'échauffement). On a indiqué l'appareillage utilisé pour conduire les mesures.

**TABLEAU IV**

| | MP1 | P1 |
|---|---|---|
| Echauffement interne (°C)⁽¹⁾ | 90 | 78 |

| | | |
|---|---|---|
| (1) Flexomètre GOODRICH | | |

La tendance à l'échauffement obtenu à partir de la silice selon l'invention est faible.

## Revendications

1. Procédé de préparation de silice précipitée du type comprenant la réaction d'un silicate de métal alcalin M avec un agent acidifiant ce par quoi l'on obtient une suspension de silice précipitée, puis la séparation et le séchage de cette suspension, dans lequel on réalise la précipitation de la manière suivante :
(i) on forme un pied de cuve initial comportant un silicate de métal alcalin M, la concentration en silicate (exprimée en SiO₂) dans ledit pied de cuve initial étant inférieure à 20 g/l,
(ii) on ajoute l'agent acidifiant audit pied de cuve jusqu'à ce qu'au moins 5 % de la quantité de M₂O présente dans ledit pied de cuve soient neutralisés,
(iii) on ajoute au milieu réactionnel simultanément de l'agent acidifiant et un silicate de métal alcalin M telle que le rapport quantité de silicate ajoutée (exprimée en SiO₂) / quantité de silicate présente dans le pied de cuve initial (exprimée en SiO₂) soit supérieur à 4 et d'au plus 100,
caractérisé en ce que ledit procédé comprend une des deux opérations (a) ou (b) suivantes :
(a) on ajoute, après l'étape (iii), au milieu réactionnel au moins un composé A de l'aluminium, puis un agent basique, ladite séparation comportant une filtration et un délitage du gâteau issu de cette filtration, ledit délitage étant effectué en présence d'au moins un composé B de l'aluminium,
(b) on ajoute, après l'étape (iii), au milieu réactionnel simultanément un silicate et au moins un composé A de l'aluminium et, lorsque ladite séparation comporte une filtration et un délitage du gâteau issu de cette filtration, le délitage est de préférence effectué en présence d'au moins un composé B de l'aluminium.

2. Procédé selon la revendication 1, comprenant la réaction d'un silicate avec un agent acidifiant ce par quoi l'on obtient une suspension de silice précipitée, puis la séparation et le séchage de cette suspension, dans lequel :
- on réalise la précipitation de la manière suivante :
(i) on forme un pied de cuve initial comportant un silicate de métal alcalin M, la concentration en silicate (exprimée en SiO₂) dans ledit pied de cuve initial étant inférieure à 20 g/l,
(ii) on ajoute l'agent acidifiant audit pied de cuve jusqu'à ce qu'au moins 5 % de la quantité de M₂O présente dans ledit pied de cuve soient neutralisés,
(iii) on ajoute au milieu réactionnel simultanément de l'agent acidifiant et un silicate de métal alcalin M telle que le rapport quantité de silicate ajoutée (exprimée en SiO₂) / quantité de silicate présente dans le pied de cuve initial (exprimée en SiO₂) soit supérieur à 4 et d'au plus 100,
- puis, on effectue les étapes suivantes :
(iv) on ajoute au milieu réactionnel au moins un composé A de l'aluminium,
(v) on ajoute au milieu réactionnel un agent basique, de préférence jusqu'à l'obtention d'une valeur du pH du milieu réactionnel comprise entre 6,5 et 10, en particulier entre 7,2 et 8,6,
(vi) on ajoute au milieu réactionnel de l'agent acidifiant, de préférence jusqu'à l'obtention d'une valeur du pH du milieu réactionnel comprise entre 3 et 5, en particulier entre 3,4 et 4,5,
- la séparation comporte une filtration et un délitage du gâteau issu de la filtration, le délitage étant effectué en présence d'au moins un composé B de l'aluminium.

3. Procédé selon la revendication 2, caractérisé en ce que, entre l'étape (iii) et l'étape (iv), on ajoute au milieu réactionnel de l'agent acidifiant, de préférence jusqu'à l'obtention d'une valeur du pH du milieu réactionnel comprise entre 3 et 6,5.

4. Procédé selon la revendication 1, comprenant la réaction d'un silicate avec un agent acidifiant ce par quoi l'on obtient une suspension de silice précipitée, puis la séparation et le séchage de cette suspension, dans lequel on réalise la précipitation de la manière suivante :
(i) on forme un pied de cuve initial comportant un silicate de métal alcalin M, la concentration en silicate (exprimée en SiO₂) dans ledit pied de cuve initial étant inférieure à 20 g/l,
(ii) on ajoute l'agent acidifiant audit pied de cuve jusqu'à ce qu'au moins 5 % de la quantité de M₂O présente dans ledit pied de cuve soient neutralisés,
(iii) on ajoute au milieu réactionnel simultanément de l'agent acidifiant et un silicate de métal alcalin M telle que le rapport quantité de silicate ajoutée (exprimée en SiO₂) / quantité de silicate présente dans le pied de cuve initial (exprimée en SiO₂) soit supérieur à 4 et d'au plus 100,
(iv) on ajoute au milieu réactionnel simultanément un silicate et au moins un composé A de l'aluminium.

5. Procédé selon la revendication 4, caractérisé en ce que, après l'étape (iv), on ajoute au milieu réactionnel de l'agent acidifiant, de préférence jusqu'à l'obtention d'une valeur du pH du milieu réactionnel comprise entre 3 et 6,5.

6. Procédé selon l'une des revendications 4 et 5, caractérisé en ce que la séparation comporte une filtration et un délitage du gâteau issu de la filtration, le délitage étant effectué en présence d'au moins un composé B de l'aluminium.

7. Procédé selon l'une des revendications 1 à 6, caractérisé en ce que, dans l'étape (ii), on ajoute l'agent acidifiant jusqu'à ce qu'au moins 50 % de la quantité de M₂O présente dans ledit pied de cuve initial soient neutralisés.

8. Procédé selon l'une des revendications 1 à 7, caractérisé en ce que, dans l'étape (iii), on ajoute au milieu réactionnel simultanément de l'agent acidifiant et un silicate de métal alcalin M telle que le rapport quantité de silicate ajoutée (exprimée en SiO₂) / quantité de silicate présente dans le pied de cuve initial (exprimée en SiO₂) soit compris entre 12 et 100, de préférence entre 12 et 50.

9. Procédé selon l'une des revendications 1 à 7, caractérisé en ce que, dans l'étape (iii), on ajoute au milieu réactionnel simultanément de l'agent acidifiant et un silicate de métal alcalin M telle que le rapport quantité de silicate ajoutée (exprimée en SiO₂) / quantité de silicate présente dans le pied de cuve initial (exprimée en SiO₂) soit supérieur à 4 et inférieur à 12, de préférence compris entre 5 et 11,5.

10. Procédé selon l'une des revendications 1 à 9, caractérisé en ce que, pendant toute l'étape (iii), la quantité d'agent acidifiant ajoutée est telle que 80 à 99 % de la quantité de M₂O ajoutée soient neutralisés.

11. Procédé selon l'une des revendications 1 à 10, caractérisé en ce que, dans l'étape (iii), on procède à ladite addition simultanée d'agent acidifiant et de silicate à un premier palier de pH du milieu réactionnel, pH₁, puis à un second palier de pH du milieu réactionnel, pH₂, tel que 7 < pH₂ < pH₁ < 9.

12. Procédé selon l'une des revendications 1 à 11, caractérisé en ce qu'aucun électrolyte n'est utilisé.

13. Procédé selon l'une des revendications 1 à 12, caractérisé en ce que ladite concentration en silicate exprimée en SiO₂ dans ledit pied de cuve initial est d'au plus 11 g/l.

14. Procédé selon l'une des revendications 1 à 12, caractérisé en ce que ladite concentration en silicate exprimée en SiO₂ dans ledit pied de cuve initial est d'au moins 8 g/l.

15. Procédé selon la revendication 14, caractérisé en ce que ladite concentration en silicate exprimée en SiO₂ dans ledit pied de cuve initial est comprise entre 10 et 15 g/l.

16. Procédé selon l'une des revendications 1 à 15, caractérisé en ce que ladite séparation comprend une filtration effectuée au moyen d'un filtre presse.

17. Procédé selon l'une des revendications 1 à 13, caractérisé en ce que ledit séchage est effectué par atomisation.

18. Procédé selon l'une des revendications 14 à 16, caractérisé en ce que ledit séchage est effectué par atomisation au moyen d'un atomiseur à buses.

19. Procédé selon l'une des revendications 17 et 18, caractérisé en ce que le produit séché est ensuite aggloméré.

20. Procédé selon l'une des revendications 17 et 18, caractérisé en ce que le produit séché est ensuite broyé, puis, éventuellement, aggloméré.

21. Procédé selon l'une des revendications 1 à 20, caractérisé en ce que les quantités de composés A et B de l'aluminium utilisées sont telles que la silice précipitée préparée contient au moins 0,45 % en poids d'aluminium.

22. Procédé selon l'une des revendications 1 à 21, caractérisé en ce que le composé A de l'aluminium est un sel organique ou inorganique de l'aluminium, le sel organique étant de préférence choisi parmi les sels d'acides carboxyliques ou ploycarboxyliques, et le sel inorganique étant de préférence choisi parmi les halogénures, les oxyhalogénures, les nitrates, les phosphates, les sulfates et les oxysulfates.

23. Procédé selon l'une des revendications 1 à 22, caractérisé en ce que le composé A de l'aluminium est un sulfate d'aluminium.

24. Procédé selon l'une des revendications 1 à 23, caractérisé en ce que le composé B est un aluminate de métal alcalin.

25. Procédé selon l'une des revendications 1 à 24, caractérisé en ce que le composé B de l'aluminium est un aluminate de sodium.

26. Silice précipitée caractérisée en ce qu'elle possède :
- une surface spécifique CTAB comprise entre 100 et 240 m²/g,
- une prise d'huile DOP inférieure à 300 ml/100g
- une distribution poreuse telle que le volume poreux constitué par les pores dont le diamètre est compris entre 175 et 275 A représente moins de 50 % du volume poreux constitué par les pores de diamètres inférieurs ou égaux à 400 Å,
- un diamètre médian (⌀₅₀), après désagglomération aux ultra-sons, inférieur à 5 µm,
- une teneur en aluminium d'au moins 0,45 % en poids,
et se présente sous au moins une des formes suivantes : billes sensiblement sphériques de taille moyenne d'au moins 80 µm, poudre de taille moyenne d'au moins 15 µm, granulés de taille d'au moins 1 mm.

27. Silice selon la revendication 26, caractérisée en ce qu'elle possède une teneur en aluminium comprise entre 0,50 et 1,50 % en poids.

28. Silice selon l'une des revendications 26 et 27, caractérisée en ce qu'elle possède une teneur en aluminium comprise entre 0,75 et 1,50 % en poids.

29. Silice selon l'une des revendications 26 à 28 caractérisée en ce qu'elle possède :
- une surface spécifique CTAB comprise entre 140 et 240 m²/g,
- un facteur de désagglomération aux ultra-sons (F_{D}) supérieur à 5,5 ml.

30. Silice selon la revendication 29 caractérisée en ce qu'elle possède une surface spécifique BET comprise entre 140 et 300 m²/g.

31. Silice selon l'une des revendications 26 à 28 caractérisée en ce qu'elle possède :
- une surface spécifique CTAB comprise entre 100 et 140 m²/g,
- un diamètre médian (⌀₅₀), après désagglomération aux ultra-sons, inférieur à 4,5 µm.

32. Silice selon la revendication 31 caractérisée en ce qu'elle possède une surface spécifique BET comprise entre 100 et 210 m²/g.

33. Silice selon l'une des revendications 26 à 32, caractérisée en ce qu'elle se présente sous forme de billes sensiblement sphériques de taille moyenne d'au moins 100 µm, en particulier d'au moins 150 µm.

34. Utilisation comme charge renforçante pour élastomères d'une silice selon l'une des revendications 26 à 33.

## Patentansprüche

1. Verfahren zur Herstellung einer Fällungskieselsäure, das die Reaktion eines Silicats eines Alkalimetalls M mit einem säurebildenden Mittel umfaßt, aus der man eine Fällungskieselsäuresuspension erhält, gefolgt von der Trennung und Trocknung dieser Suspension, wobei man die Ausfällung wie folgt erreicht:
(i) man bildet die anfängliche Gefäßbasis, die ein Silicat eines Alkalimetalls M enthält, wobei die Silicatkonzentration (definiert als SiO₂) in der genannten anfänglichen Gefäßbasis kleiner als 20g/l ist,
(ii) man gibt das säurebildende Mittel in die Gefäßbasis bis mindestens 5 % der Menge an M₂O in der genannten Gefäßbasis neutralisiert sind,
(iii) man gibt gleichzeitig das säurebildende Mittel und ein Silicat eines Alkalimetalls M in die Reaktionszone, so daß das Verhältnis von Menge des zugegebenen Silicats (definiert als SiO₂) / Menge des Silicats in der anfänglichen Gefäßbasis (definiert als SiO₂) größer als 4 und höchstens 100 ist,
dadurch gekennzeichnet, daß das genannte Verfahren einen der beiden folgenden Schritte (a) oder (b) umfaßt:
(a) man gibt nach Schritt (iii) in die Reaktionszone mindestens eine Aluminiumverbindung A und danach ein basisches Mittel, wobei die genannte Trennung eine Filtration und die Zerkleinerung des durch diese Filtration erhaltenen Kuchens umfaßt, wobei die Zerkleinerung vorzugsweise in Gegenwart mindestens einer Aluminiumverbindung B durchgeführt wird;
(b) man gibt nach Schritt (iii) in die Reaktionszone gleichzeitig ein Silicat und mindestens eine Aluminiumverbindung A und, wenn die genannte Trennung eine Filtration und die Zerkleinerung des durch diese Filtration erhaltenen Kuchens umfaßt, wird die Zerkleinerung vorzugsweise in Gegenwart mindestens einer Aluminiumverbindung B durchgeführt.

2. Verfahren nach Anspruch 1, das die Reaktion eines Silicats mit einem säurebildenden Mittel umfaßt, aus der man eine Fällungskieselsäuresuspension erhält, gefolgt von der Trennung und Trocknung dieser Suspension, indem:
- man die Ausfällung in der folgenden Weise erreicht:
(i) man bildet die anfängliche Gefäßbasis, die ein Silicat eines Alkalimetalls M enthält, wobei die Silicatkonzentration (definiert als SiO₂) in der genannten anfänglichen Gefäßbasis kleiner als 20g/l ist,
(ii) man gibt das säurebildende Mittel zur Gefäßbasis bis mindestens 5 % der Menge an M₂O in der genannten Gefäßbasis neutralisiert sind,
(iii)man gibt gleichzeitig das säurebildende Mittel und ein Silicat eines Alkalimetall M in die Reaktionszone, so daß das Verhältnis von Menge des zugegebenen Silicats (definiert als SiO₂) / Menge des Silicats in der anfänglichen Gefäßbasis (definiert als SiO₂) größer als 4 und höchstens 100 ist,
- gefolgt von den folgenden Schritten:
(iv) man gibt in die Reaktionszone mindestens eine Aluminiumverbindung A,
(v) man gibt in die Reaktionszone ein basisches Mittel, vorzugsweise bis man einen pH-Wert der Reaktionszone zwischen 6,5 und 10, insbesondere zwischen 7,2 und 8,6, erhält,
(vi) man gibt in die Reaktionszone ein säurebildendes Mittel, vorzugsweise bis man einen pH-Wert der Reaktionszone zwischen 3 und 5, insbesondere zwischen 3,4 und 4,5, erhält,
- die Trennung eine Filtration und die Zerkleinerung des durch die Filtration erhaltenen Kuchens umfaßt, wobei die Zerkleinerung in Gegenwart mindestens einer Aluminiumverbindung B durchgeführt wird.

3. Verfahren nach Anspruch 2, dadurch gekennzeichnet, daß man zwischen Schritt (iii) und Schritt (iv) in die Reaktionszone ein säurebildendes Mittel gibt, vorzugsweise bis man einen pH-Wert der Reaktionszone zwischen 3 und 6,5 erhält.

4. Verfahren nach Anspruch 1, das die Reaktion eines Silicats mit einem säurebildenden Mittel umfaßt, bei der man eine Fällungskieselsäuresuspension erhält, gefolgt von der Trennung und Trocknung dieser Suspension, indem man die Ausfällung in der folgenden Weise erreicht:
(i) man bildet die anfängliche Gefäßbasis, die ein Silicat eines Alkalimetalls M enthält, wobei die Silicatkonzentration (definiert als SiO₂) in der genannten anfänglichen Gefäßbasis kleiner als 20g/l ist,
(ii) man gibt das säurebildende Mittel in die Gefäßbasis bis mindestens 5 % der Menge an M₂O in der genannten Gefäßbasis neutralisiert sind,
(iii)man gibt gleichzeitig das säurebildende Mittel und ein Silicat eines Alkalimetalls M in die Reaktionszone, so daß das Verhältnis von Menge des zugegebenen Silicats (definiert als SiO₂) / Menge des Silicats in der anfänglichen Gefäßbasis (definiert als SiO₂) größer als 4 und höchstens 100 ist,
(iv) man gibt in die Reaktionszone mindestens eine Aluminiumverbindung A.

5. Verfahren nach Anspruch 4, dadurch gekennzeichnet, daß man nach Schritt (iv) in die Reaktionszone ein säurebildendes Mittel gibt, vorzugsweise bis man einen pH-Wert der Reaktionszone zwischen 3 und 6,5, erhält.

6. Verfahren nach einem der Ansprüche 4 und 5, dadurch gekennzeichnet, daß die Trennung eine Filtration und die Zerkleinerung des durch die Filtration erhaltenen Kuchens umfaßt, wobei die Zerkleinerung in Gegenwart mindestens einer Aluminiumverbindung B durchgeführt wird.

7. Verfahren nach einem der Ansprüche 1 bis 6, dadurch gekennzeichnet, daß man in Schritt (ii) ein säurebildendes Mittel zugibt bis mindestens 50 % der Menge an M₂O in der anfänglichen Gefäßbasis neutralisiert sind.

8. Verfahren nach einem der Ansprüche 1 bis 7, dadurch gekennzeichnet, daß man in Schritt (iii) dem Reaktionsgemisch gleichzeitig ein säurebildendes Mittel und ein Silicat eines Alkalimetalls M zugibt, so daß das Verhältnis von Menge des zugegebenen Silicats (definiert als SiO₂ / Menge des Silicats in der anfänglichen Gefäßbasis (definiert als SiO₂) zwischen 12 und 100, vorzugsweise zwischen 12 und 50 liegt.

9. Verfahren nach einem der Ansprüche 1 bis 7, dadurch gekennzeichnet, daß man in Schritt (iii) dem Reaktionsgemisch gleichzeitig ein säurebildendes Mittel und ein Silicat eines Alkalimetalls M gibt, so daß das Verhältnis von Menge des zugegebenen Silicats (definiert als SiO₂ / Menge des Silicats in der anfänglichen Gefäßbasis (definiert als SiO₂) größer als 4 und kleiner als 12 ist und vorzugsweise zwischen 5 und 11,5 liegt.

10. Verfahren nach einem der Ansprüche 1 bis 9, dadurch gekennzeichnet, daß während des gesamten Schrittes (iii) die Menge des zugegebenen säurebildenden Mittels so gewählt ist, daß 80 bis 99 % der Menge des zugegebenen M₂O neutralisiert werden.

11. Verfahren nach einem der Ansprüche 1 bis 10, dadurch gekennzeichnet, daß man in Schritt (iii) die genannte gleichzeitige Zugabe des säurebildenden Mittels und des Silicats auf einer ersten Stufe des pH-Werts des Reaktionsgemisches pH₁, danach auf einer zweiten Stufe des pH-Werts des Reaktionsgemisches pH₂ durchführt, so daß 7 < pH₂ < pH₁ < 9 gilt.

12. Verfahren nach einem der Ansprüche 1 bis 11, dadurch gekennzeichnet, daß kein Elektrolyt verwendet wird.

13. Verfahren nach einem der Ansprüche 1 bis 12, dadurch gekennzeichnet, daß die genannte Silicatkonzentration, definiert als SiO₂, in der genannten anfänglichen Gefäßbasis höchstens 11 g/l ist.

14. Verfahren nach einem der Ansprüche, 1 bis 12, dadurch gekennzeichnet, daß die genannte Silicatkonzentration, definiert als SiO₂, in der genannten anfänglichen Gefäßbasis mindestens 8 g/l ist.

15. Verfahren nach Anspruch 14, dadurch gekennzeichnet, daß die Silicatkonzentration, definiert als SiO₂, in der genannten anfänglichen Gefäßbasis zwischen 10 und 15 g/l liegt.

16. Verfahren nach einem der Ansprüche 1 bis 15, dadurch gekennzeichnet, daß die genannte Trennung eine Filtration umfaßt, die mit Hilfe einer Filterpresse erfolgt.

17. Verfahren nach einem der Ansprüche 1 bis 13, dadurch gekennzeichnet, daß die genannte Trocknung durch Zerstäubung erfolgt.

18. Verfahren nach einem der Ansprüche 14 bis 16, dadurch gekennzeichnet, daß die genannte Trocknung durch Zerstäubung mit einem Düsenzerstäuber erfolgt.

19. Verfahren nach einem der Ansprüche 17 und 18, dadurch gekennzeichnet, daß das getrocknete Erzeugnis anschließend agglomeriert wird.

20. Verfahren nach einem der Ansprüche 17 und 18, dadurch gekennzeichnet, daß das getrocknete Erzeugnis anschließend vermahlen und danach gegebenenfalls agglomeriert wird.

21. Verfahren nach einem der Ansprüche 1 bis 20, dadurch gekennzeichnet, daß die Mengen der verwendeten Aluminiumverbindungen A und B so bemessen sind, daß die hergestellt Fällungskieselsäure mindestens 0,45 Gew.-% Aluminium enthält.

22. Verfahren nach einem der Ansprüche 1 bis 21, dadurch gekennzeichnet. daß die Aluminiumverbindung A ein organisches oder anorganisches Aluminiumsalz ist, wobei das organische Salz vorzugsweise aus den Salzen der Carboxylsäuren oder Polycarboxylsäuren und das anorganische Salz vorzugsweise aus den Halogeniden, Oxyhalogeniden, Nitraten, Phosphaten, Sulfaten und Oxysulfaten gewählt ist.

23. Verfahren nach einem der Ansprüche 1 bis 22, dadurch gekennzeichnet, daß die Aluminiumverbindung A ein Aluminiumsulfat ist.

24. Verfahren nach einem der Ansprüche 1 bis 23, dadurch gekennzeichnet, daß die Verbindung B ein Alkalimetallaluminat ist.

25. Verfahren nach einem der Ansprüche 1 bis 24, dadurch gekennzeichnet, daß die Aluminiumverbindung B ein Natriumaluminat ist.

26. Fällungskieselsäure, dadurch gekennzeichnet, daß sie folgendes aufweist:
- eine spezifische Oberfläche CTAB zwischen 100 und 240 m²/g
- eine Ölbindung DOP von weniger als 300 ml/100g,
- eine Porenverteilung, so daß das Porenvolumen, das aus Poren mit einem Durchmesser zwischen 175 und 275 Å besteht, weniger als 50 % des Porenvolumens ausmacht, das aus Poren mit einem Durchmesser größer oder gleich 400 Å besteht,
- einen mittleren Durchmesser (⌀₅₀) nach der Zerkleinerung durch Ultraschall von weniger als 5 µm,
- einen Aluminiumgehalt von mindestens 0,45 Gew.-%,
und in einer der folgenden Formen vorliegt: im wesentlichen runde Kugeln einer mittleren Größe von mindestens 80 µm, Pulver einer mittleren Größe von mindestens 15 µm, Granulate einer Größe von mindestens 1 mm.

27. Kieselsäure nach Anspruch 26, dadurch gekennzeichnet, daß sie einen Aluminiumgehalt zwischen 0,50 und 1,50 Gew.-% aufweist.

28. Kieselsäure nach einem der Ansprüche 26 und 27, dadurch gekennzeichnet, daß sie einen Aluminiumgehalt zwischen 0,75 und 1,50 Gew.-% aufweist.

29. Kieselsäure nach einem der Ansprüche 26 bis 28, dadurch gekennzeichnet, daß sie aufweist:
- eine spezifische Oberfläche CTAB zwischen 140 und 240 m²/g,
- einen Ultraschallzerkleinerungsfaktor (F_{D}) von mehr als 5,5 ml.

30. Kieselsäure nach Anspruch 29, dadurch gekennzeichnet, daß sie eine spezifische Oberfläche BET zwischen 140 und 300 m²/g aufweist.

31. Kieselsäure nach einem der Ansprüche 26 bis 28, dadurch gekennzeichnet, daß sie aufweist:
- eine spezifische Oberfläche CTAB zwischen 100 und 140 m²/g
- einen mittleren Durchmesser (⌀₅₀) nach der Zerkleinerung durch Ultraschall von weniger als 4,5 µm.

32. Kieselsäure nach Anspruch 31, dadurch gekennzeichnet, daß sie eine spezifische Oberfläche BET zwischen 100 und 210 m²/g hat.

33. Kieselsäure nach einem der Ansprüche 26 bis 32, dadurch gekennzeichnet, daß sie in Form von im wesentlichen runden Kugeln einer mittleren Größe von mindestens 100 um, vorzugsweise von mindestens 150 µm, vorliegt.

34. Verwendung einer Kieselsäure nach einem der Ansprüche 26 bis 33, als Verstärkungsmittel für Elastomere.

## Claims

1. Process for the preparation of precipitated silica of the type including the reaction of a silicate of alkali metal M with an acidifying agent whereby a suspension of precipitated silica is obtained, then the separation and the drying of this suspension, in which the precipitation is carried out in the following manner:
(i) an initial base stock comprising a silicate of alkali metal M is formed, the silicate concentration (expressed as SiO₂) in the said initial base stock being lower than 20 g/l,
(ii) the acidifying agent is added to the said base stock until at least 5 % of the quantity of M₂O present in the said base stock is neutralized,
(iii) acidifying agent and a silicate of alkali metal M are added simultaneously to the reaction mixture such that the ratio of the quantity of silicate added (expressed as SiO₂)/the quantity of silicate present in the initial base stock (expressed as SiO₂) is greater than 4 and at most 100,
characterized in that the said process includes one of the following two operations (a) or (b):
(a) at least one aluminium compound A and then a basic agent are added to the reaction mixture after stage (iii), the said separation comprising a filtration and disintegration of the cake originating from this filtration, the said disintegration being performed in the presence of at least one aluminium compound B,
(b) a silicate and at least one aluminium compound A are added simultaneously to the reaction mixture after stage (iii) and, when the said separation comprises a filtration and disintegration of the cake originating from this filtration, the disintegration is preferably performed in the presence of at least one aluminium compound B.

2. Process according to claim 1, including the reaction of a silicate with an acidifying agent, whereby a suspension of precipitated silica is obtained, then the separation and the drying of this suspension, in which:
- the precipitation is carried out in the following manner:
(i) an initial base stock comprising a silicate of alkali metal M is formed, the silicate concentration (expressed as SiO₂) in the said initial base stock being lower than 20 g/l,
(ii) the acidifying agent is added to the said base stock until at least 5 % of the quantity of M₂O present in the said base stock is neutralized,
(iii) acidifying agent and a silicate of alkali metal M are added simultaneously to the reaction mixture such that the ratio of the quantity of silicate added (expressed as SiO₂)/the quantity of silicate present in the initial base stock (expressed as SiO₂) is greater than 4 and at most 100,
- then the following successive stages are performed:
(iv) at least one aluminium compound A is added to the reaction mixture,
(v) a basic agent is added to the reaction mixture preferably until a pH value of the reaction mixture of between 6.5 and 10, in particular between 7.2 and 8.6, is obtained,
(vi) acidifying agent is added to the reaction mixture, preferably until a pH value of the reaction mixture of between 3 and 5, in particular between 3.4 and 4.5, is obtained,
- the separation comprises a filtration and disintegration of the cake originating from the filtration, the disintegration being performed in the presence of at least one aluminium compound B.

3. Process according to claim 2, characterized in that, between stage (iii) and stage (iv), acidifying agent is added to the reaction mixture, preferably until a pH value of the reaction mixture of between 3 and 6.5 is obtained.

4. Process according to claim 1, including the reaction of a silicate with an acidifying agent, whereby a suspension of precipitated silica is obtained, then the separation and the drying of this suspension, in which the precipitation is carried out in the following manner:
(i) an initial base stock is formed comprising a silicate of alkali metal, the silicate concentration (expressed as SiO₂) in the said initial base stock being lower than 20 g/l,
(ii) the acidifying agent is added to the said base stock until at least 5 % of the quantity of M₂O present in the said base stock is neutralized,
(iii) acidifying agent and a silicate of alkali metal M are added simultaneously to the reaction mixture such that the ratio of the quantity of silicate added (expressed as SiO₂)/the quantity of silicate present in the initial base stock (expressed as SiO₂) is greater than 4 and at most 100,
(iv) a silicate and at least one aluminium compound A are simultaneously added to the reaction mixture.

5. Process according to claim 4, characterized in that, after stage (iv), acidifying agent is added to the reaction mixture preferably until a pH value of the reaction mixture of between 3 and 6.5 is obtained.

6. Process according to either of claims 4 and 5, characterized in that the separation comprises a filtration and disintegration of the cake originating from the filtration, the disintegration being performed in the presence of at least one aluminium compound B.

7. Process according to any one of claims 1 to 6, characterized in that, in stage (ii), the acidifying agent is added until at least 50 % of the quantity of M₂O present in the said initial base stock is neutralized.

8. Process according to one of claims 1 to 7, characterized in that, in stage (iii), acidifying agent and a silicate of alkali metal M are simultaneously added to the reaction mixture, such that the ratio of the quantity of silicate added (expressed as SiO₂)/the quantity of silicate present in the initial base stock (expressed as SiO₂) is between 12 and 100, preferably between 12 and 50.

9. Process according to one of claims 1 to 7, characterized in that, in stage (iii), acidifying agent and a silicate of alkali metal M are simultaneously added to the reaction mixture, such that the ratio of the quantity of silicate added (expressed as SiO₂)/the quantity of silicate present in the initial base stock (expressed as SiO₂) is higher than 4 and lower than 12, preferably between 5 and 11.5.

10. Process according to one of claims 1 to 9, characterized in that, throughout stage (iii), the quantity of acidifying agent which is added is such that 80 to 99 % of the quantity of M₂O which is added is neutralized.

11. Process according to one of claims 1 to 10, characterized in that, in stage (iii) the said simultaneous addition of acidifying agent and of silicate is undertaken at a first pH plateau of the reaction mixture, pH₁, then at a second pH plateau of the reaction mixture, pH₂, such that 7 < pH₂ < PH₁ < 9.

12. Process according to one of claims 1 to 11, characterized in that no electrolyte is employed.

13. Process according to one of claims 1 to 12, characterized in that the said silicate concentration expressed as SiO₂ in the said initial base stock is at most 11 g/l.

14. Process according to one of claims 1 to 12, characterized in that the said silicate concentration expressed as SiO₂ in the said initial base stock is at least 8 g/l.

15. Process according to claim 14, characterized in that the said silicate concentration expressed as SiO₂ in the said initial base stock is between 10 and 15 g/l.

16. Process according to one of claims 1 to 15, characterized in that the said separation includes a filtration performed by means of a filter press.

17. Process according to one of claims 1 to 13, characterized in that the said drying is performed by spraying.

18. Process according to one of claims 14 to 16, characterized in that the said drying is performed by means of a multinozzle sprayer.

19. Process according to either of claims 17 and 18, characterized in that the dried product is subsequently agglomerated.

20. Process according to one of claims 17 and 18, characterized in that the dried product is subsequently milled, then optionally agglomerated.

21. Process according to one of claims 1 to 20, characterized in that the quantities of aluminium compounds A and B which are employed are such that the precipitated silica prepared contains at least 0.45 % by weight of aluminium.

22. Process according to one of claims 1 to 21, characterized in that the aluminium compound A is an organic or inorganic aluminium salt, the organic salt being preferably chosen from the salts of carboxylic or polycarboxylic acids and the inorganic salt being preferably chosen from halides, oxyhalides, nitrates, phosphates, sulphates and oxysulphates.

23. Process according to one of claims 1 to 22, characterized in that the aluminium compound A is an aluminium sulphate.

24. Process according to one of claims 1 to 23, characterized in that the compound B is an alkali metal aluminate.

25. Process according to one of claims 1 to 24, characterized in that the aluminium compound B is a sodium aluminate.

26. Precipitated silica characterized in that it has:
- a CTAB specific surface of between 100 and 240 m²/g,
- a DOP oil uptake lower than 300 ml/100 g,
- a pore distribution such that the pore volume consisting of the pores whose diameter is between 175 and 275 Å represents less than 50 % of the pore volume consisting of the pores of diameters which are smaller than or equal to 400 Å,
- a median diameter (⌀₅₀), after disintegration with ultrasound, smaller than 5 µm and
- an aluminium content of at least 0.45 % by weight, and is in at least one of the following forms: substantially spherical beads with a mean size of at least 80 µm, powder with a mean size of at least 15 µm, granules at least 1 mm in size.

27. Silica according to claim 26, characterized in that it has an aluminium content of between 0.50 and 1.50 % by weight.

28. Silica according to either of claims 26 and 27, characterized in that it has an aluminium content of between 0.75 and 1.50 % by weight.

29. Silica according to one of claims 26 to 28, characterized in that it has:
- a CTAB specific surface of between 140 and 240 m²/g,
- an ultrasonic disintegration factor (F_{D}) higher than 5.5 ml.

30. Silica according to claim 29, characterized in that it has a BET specific surface of between 140 and 300 m²/g.

31. Silica according to one of claims 26 to 28, characterized in that it has:
- a CTAB specific surface of between 100 and 140 m²/g,
- a median diameter (⌀₅₀), after disintegration with ultrasound, smaller than 4.5 µm.

32. Silica according to claim 31, characterized in that it has a BET specific surface of between 100 and 210 m²/g.

33. Silica according to one of claims 26 to 32, characterized in that it is in the form of substantially spherical beads with a mean size of at least 100 µm, in particular at least 150 µm.

34. Use, as reinforcing filler for elastomers, of a silica according to one of claims 26 to 33.
